# EUROPÄISCHE PATENTANMELDUNG

(11) **EP 3 664 180 A1**
(43) Veröffentlichungstag der Anmeldung: **10.06.2020**
(21) Anmeldenummer: 19209500.8
(22) Anmeldetag: 15.11.2019
(51) Int. Cl.: H01M 2/02, H01M 10/04

(54) **BATTERIEMODUL**

(30) Priorität: 04.12.2018 DE 102018220937
(71) Anmelder: Robert Bosch GmbH, 70442 Stuttgart (DE)
(72) Erfinder: Schmitt, Markus, 71732 Tamm (DE); Kopp, Benjamin, 71686 Remseck Am Neckar (DE)

(57) **Zusammenfassung**

Die Erfindung betrifft ein Batteriemodul mit einer Mehrzahl an Batteriezellen (2), insbesondere Lithium-Ionen-Batteriezellen (20), welche in einem von einem Gehäuse (5) des Batteriemoduls (1) ausgebildeten Aufnahmeraum (6) aufgenommen sind, wobei das Gehäuse (5) des Batteriemoduls (1) weiterhin ein Aufnahmeelement (7) ausgebildet zur Aufnahme einer Abdeckplatte (8) ausbildet, wobei in dem Aufnahmeelement (7) eine Abdeckplatte (8) in der Art aufgenommen ist, dass die Abdeckplatte (8) und das Gehäuse (5) einen von Temperierfluid durchströmbaren Strömungsraum (9) ausbilden, wobei das Gehäuse (5) des Batteriemoduls (1) den Strömungsraum (9) weiterhin fluiddicht von dem Aufnahmeraum (6) trennt.

## Beschreibung

### Stand der Technik

Die Erfindung geht aus von einem Batteriemodul nach Gattung des unabhängigen Anspruchs.

Aus dem Stand der Technik ist bekannt, dass Batteriemodule aus einer Mehrzahl an einzelnen Batteriezellen bestehen können, welche seriell und/oder parallel elektrisch leitend miteinander verschaltet sein können.

Hybrid angetriebene elektrische Fahrzeuge (HEV) und auch elektrisch angetriebene Fahrzeuge (EV) benötigen energiereiche und leistungsstarke Batteriesysteme, damit deren elektrischen Antriebsmaschinen zu erreichende Fahrleistungen erreichen können.

Als elektrische Energiespeicher werden hierbei üblicherweise energiereiche und leistungsstarke Lithium-Ionen- bzw. Lithium-Polymer-Batteriezellen genutzt, wobei ungefähr 100 Batteriezellen zu einem Batteriemodul zusammengeschaltet werden.

Solch leistungsfähige Batteriezellen haben dabei jeweils eine Leistung von ungefähr 90 Amperestunden (Ah).

Insbesondere in elektrisch betriebenen Fahrzeugen oder auch in hybriden elektrischen Fahrzeugen sowie in stationären Anwendungen werden Batteriesysteme üblicherweise mit einer Mehrzahl an solchen Batteriemodulen eingesetzt. Batteriezellen können dabei beispielsweise als prismatische Batteriezellen oder als zylindrische Batteriezellen ausgebildet sein, wobei im Bereich der Elektromobilität auch zunehmend sogenannte Beutelzellen, zu Englisch auch als "pouch-Zellen" bezeichnet, eingesetzt werden.

Insbesondere während des Ladens und des Entladens erwärmen sich Lithiumlonen- bzw. Lithium-Polymer-Batteriezellen aufgrund von chemischen Wandlungsprozessen.

Je leistungsfähiger dabei ein solches Batteriemodul ist, desto größer ist auch die entstehende Erwärmung, so dass oftmals effiziente und aktive Temperiersysteme erforderlich sind, welche die Batteriezellen sowohl heizen als auch kühlen können.

Aus dem Stand der Technik ist es dabei bekannt, dass Batteriemodule eine von Temperierfluid durchströmbare Kühlplatte aufweisen können, welche dazu ausgebildet ist, die Batteriezellen eines Batteriemoduls zu temperieren, also zu kühlen oder auch zu erwärmen.

Beispielsweise zeigen die Druckschriften DE 20 2012 102 349 U1 und DE 10 2008 059 955 A1 solche aus dem Stand der Technik bekannten Kühlplatten, welche insbesondere aus einem ersten Plattenelement und aus einem mit dem ersten Plattenelement stoffschlüssig verbundenen zweiten Plattenelement ausgebildet sind.

### Offenbarung der Erfindung

Ein Batteriemodul mit einer Mehrzahl an Batteriezellen mit den Merkmalen des unabhängigen Anspruchs bietet den Vorteil, dass auf zuverlässige Weise ein fluiddicht von der Mehrzahl an Batteriezellen des Batteriemoduls getrennter Strömungsraum ausgebildet werden kann, so dass die Batteriezellen des Batteriemoduls zuverlässig mittels eines den Strömungsraum durchströmenden Temperierfluids temperiert werden können.

Dazu wird erfindungsgemäß ein Batteriemodul mit einer Mehrzahl an Batteriezellen zur Verfügung gestellt.

Insbesondere ist die Mehrzahl an Batteriezellen dabei jeweils als Lithium-Ionen-Batteriezellen ausgebildet.

Die Mehrzahl an Batteriezellen ist dabei in einem Aufnahmeraum aufgenommen, wobei der Aufnahmeraum von einem Gehäuse des Batteriemoduls ausgebildet ist.

Weiterhin bildet das Gehäuse des Batteriemoduls ein Aufnahmeelement aus, welches ausgebildet ist eine Abdeckplatte aufzunehmen.

Dabei ist in dem Aufnahmeelement eine Abdeckplatte in der Art aufgenommen, dass die Abdeckplatte und das Gehäuse einen von Temperierfluid durchströmbaren Strömungsraum ausbilden.

Dabei trennt das Gehäuse des Batteriemoduls den Strömungsraum weiterhin fluiddicht von dem Aufnahmeraum.

Durch die in den abhängigen Ansprüchen aufgeführten Maßnahmen sind vorteilhafte Weiterbildungen und Verbesserungen der im unabhängigen Anspruch angegebenen Vorrichtung möglich.

Es ist zweckmäßig, wenn das Aufnahmeelement und/oder die Abdeckplatte jeweils Strömungsleitelemente ausbilden, welche jeweils in den Strömungsraum ragen.

Dabei sind die Strömungsleitelemente dazu ausgebildet, eine Strömung eines durch den Strömungsraum strömenden Temperierfluids zu stören.

Durch das Einbringen von Strömungsleitelementen in den Strömungsraum umströmt das Temperierfluid die Strömungsleitelemente, wodurch die Strömung beeinflusst werden kann.

Dadurch ist es möglich, dass mittels der Strömungsleitelemente die sogenannte Reynoldszahl der Strömung erhöht werden kann. Weiterhin kann dies insbesondere dazu führen, dass die Strömung des durch den Strömungsraum strömenden Temperierfluids von einer laminaren Strömung in eine turbulente Strömung übergeht.

Insgesamt bietet somit eine Störung des durch den Strömungsraum strömenden Temperierfluids den Vorteil, dass der Wärmeübergang erhöht werden kann.
Des Weiteren bieten derartige Strömungsleitelemente den Vorteil, dass eine wärmeübertragende Oberfläche zwischen dem Strömungsraum und dem Temperierfluid vergrößert werden kann.

Beispielsweise ist es dadurch möglich, eine optimierte Strömungsstruktur mit einem reduzierten Druckverlust und einem erhöhten Wärmeübergang auszubilden.

An dieser Stelle sei hierzu angemerkt, dass die Strömungsleitelemente dabei beispielsweise von dem Aufnahmeelement ausgebildet werden können oder auch, dass die Strömungsleitelemente beispielsweise von der Abdeckplatte ausgebildet werden können.

Des Weiteren ist es aber auch denkbar, dass sowohl das Aufnahmeelement als auch die Abdeckplatte jeweils Strömungsleitelemente ausbilden.

Die Ausbildung der Strömungsleitelemente insbesondere der Abdeckplatte kann dabei beispielsweise mittels eines Tiefziehprozesses erreicht werden.
Die Ausbildung der Strömungsleitelemente insbesondere des Gehäuses des Batteriemoduls kann dabei beispielsweise während einer Herstellung des Gehäuses mittels eines Druckgussprozesses erreicht werden.

Des Weiteren ist es möglich, dass beispielsweise das Aufnahmeelement von der Abdeckplatte ausgebildete Strömungsleitelemente mechanisch kontaktiert und/oder dass die Abdeckplatte von dem Aufnahmeelement ausgebildete Strömungsleitelemente mechanisch kontaktiert.

Selbstverständlich ist es besonders bevorzugt aber auch möglich, dass das Aufnahmeelement beabstandet von den von der Abdeckplatte ausgebildeten Strömungsleitelementen angeordnet ist und/oder das die Abdeckplatte beabstandet von den von der Aufnahmewand ausgebildeten Strömungsleitelementen angeordnet ist.

Von Vorteil ist es, wenn die Strömungsleitelemente jeweils eine Querschnittsfläche aufweisen, die parallel zu einer Längsrichtung der Abdeckplatte angeordnet ist. Eine Längsrichtung der Abdeckplatte soll dabei insbesondere deren größte Ausdehnung beschreiben.

Bevorzugt weisen die Querschnittsflächen dabei jeweils eine kreisförmige, ovale, tropfenförmige, rechteckige oder quadratische Form auf.

Dies bietet den Vorteil, dass mittels einer definierten Ausbildung der Querschnittsflächen definierte Störungen der Strömung eines den Strömungsraum durchströmenden Temperierfluids ausgebildet werden können, so dass insgesamt eine gezielte Beeinflussung der Strömung möglich ist.

Zweckmäßigerweise sind die Strömungsleitelemente in mehreren Reihen angeordnet.

Eine Reihe umfasst dabei beispielsweise eine Mehrzahl an Abstandselementen, deren Schwerpunkte bevorzugt alle auf derselben Geraden liegen und bei welchen die Schwerpunkte jeweils benachbarter Abstandselemente alle jeweils einen gleichen Abstand beabstandet angeordnet sind.

Weiterhin ist es dabei zweckmäßig, wenn insbesondere Strömungsleitelemente, welche eine Querschnittsfläche mit einer kreisförmigen Form aufweisen, in der Art angeordnet sind, dass benachbart zueinander angeordnete Reihen jeweils versetzt zueinander angeordnet sind.

Darunter soll verstanden werden, dass beispielsweise ein Strömungsleitelement einer Reihe in der Art benachbart zu zwei Strömungsleitelementen einer benachbarten Reihe angeordnet ist, dass dieses jeweils denselben Abstand zu den zwei Strömungsleitelementen der benachbarten Reihe aufweist.

Mit anderen Worten ausgedrückt kann dies auch bedeuten, dass jeweils vier Strömungsleitelemente beispielsweise ein Parallelogramm beschreiben können. Eine derartige Anordnung der Strömungsleitelemente zueinander bietet den Vorteil, dass auf bevorzugte Weise die Strömung eines durch den Strömungsraum strömenden Temperierfluids gestört werden kann, um den Wärmeübergang zwischen dem Temperierfluid und der Batteriezellen zu erhöhen.

Weiterhin ist es zweckmäßig, wenn die Strömungsleitelemente, welche eine Querschnittsfläche mit einer rechteckigen Form aufweisen in mehreren Reihen zueinander angeordnet sind.

Dabei sind benachbart zueinander angeordnete Strömungsleitelemente zweier benachbarter Reihen jeweils unter Ausbildung eines spitzen Winkels zueinander angeordnet.

Unter einem spitzen Winkels soll dabei ein Winkel verstanden sein, welcher eine Öffnung zwischen 0° und 90° ausbildet.

Eine derartige Anordnung der Strömungsleitelemente zueinander bietet auch den Vorteil, dass auf bevorzugte Weise die Strömung eines durch den Strömungsraum strömenden Temperierfluids gestört werden kann, um den Wärmeübergang zwischen dem Temperierfluid und der Abdeckplatte zu erhöhen.

An dieser Stelle sei hierzu bemerkt, dass es bevorzugt ist, wenn in Randbereichen des Strömungsraumes die Strömungsleitelemente in einer geringeren Dichte bzw. Anzahl angeordnet sind oder dass keine Strömungsleitelemente angeordnet sind, wodurch mittels eines durch einen geringeren Druckverlust bedingten größeren Volumenstromes Todzonen der Strömung des Temperierfluids reduziert werden können.

Von Vorteil ist es, wenn zwischen der Abdeckplatte und dem Gehäuse des Batteriemoduls ein Dichtelement angeordnet ist.

Dies bietet den Vorteil, dass eine zuverlässige Abdichtung des Strömungsraums gegenüber einer Umgebung des Batteriemoduls ausgebildet werden kann.

Gemäß einem bevorzugten Aspekt der Erfindung ist die Abdeckplatte stoffschlüssig mit dem Aufnahmeelement verbunden.

Eine bevorzugte stoffschlüssige Verbindung kann hierbei beispielsweise geschweißt oder auch gelötet ausgebildet sein.

Insgesamt bietet eine stoffschlüssige Verbindung den Vorteil, dass eine zuverlässige Verbindung zwischen der Abdeckplatte und dem Aufnahmeelement ausgebildet werden kann.

Es ist zweckmäßig, wenn die Abdeckplatte und/oder das Gehäuse des Batteriemoduls einen ersten Anschluss und einen zweiten Anschluss aufweisen. Dabei ist der erste Anschluss zu einem Einströmen von Temperierfluid in den Strömungsraum hinaus ausgebildet.

Dabei ist der zweite Anschluss zu einem Ausströmen von Temperierfluid aus dem Strömungsraum heraus ausgebildet.

Dies bietet den Vorteil, dass der Strömungsraum fluidleitend beispielsweise mit dem Kältekreislauf eines Fahrzeuges verbunden werden kann.

Gemäß zweckmäßigen Aspekt der Erfindung ist die Mehrzahl an Batteriezellen unmittelbar an einer dem Strömungsraum gegenüberliegenden Seite des Aufnahmeelements des Gehäuses des Batteriemoduls angeordnet.

Dadurch ist es möglich, dass Wärme von der Mehrzahl an Batteriezellen zuverlässig an ein den Strömungsraum durchströmendes Temperierfluid abgegeben werden kann und zugleich aber auch mittels des Gehäuses eine fluiddichte Trennung zwischen den Batteriezellen und dem Strömungsraum ausgebildet werden kann.

Zweckmäßigerweise bildet das Aufnahmeelement einen Boden des Batteriemoduls aus.
Ein Boden des Batteriemoduls soll dabei bei einer üblichen Anordnung des Batteriemoduls an dessen Unterseite angeordnet sein.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: in einer perspektivischen Ansicht von oben ein erfindungsgemäßes Batteriemodul,
- Figur 2A: in einer perspektivischen Ansicht von unten eine erste Ausführungsform eines erfindungsgemäßen Batteriemoduls,
- Figur 2B: in einer perspektivischen Ansicht von unten die erste Ausführungsform des erfindungsgemäßen Batteriemoduls gemäß Figur 2A in einer Explosionsdarstellung,
- Figur 3A: in einer perspektivischen Ansicht von unten eine zweite Ausführungsform eines erfindungsgemäßen Batteriemoduls,
- Figur 3B: in einer perspektivischen Ansicht von unten die zweite Ausführungsform des erfindungsgemäßen Batteriemoduls gemäß Figur 3A in einer Explosionsdarstellung,
- Figur 4A: eine weitere Ausführungsform einer Abdeckplatte,
- Figur 4B: noch eine weitere Ausführungsform einer Abdeckplatte,
- Figur 5: in einer perspektivischen Ansicht von unten ein Gehäuse eines Batteriemoduls und
- Figur 6: in einer Ansicht von der Seite eine Schnittansicht durch ein erfindungsgemäßes Batteriemodul.

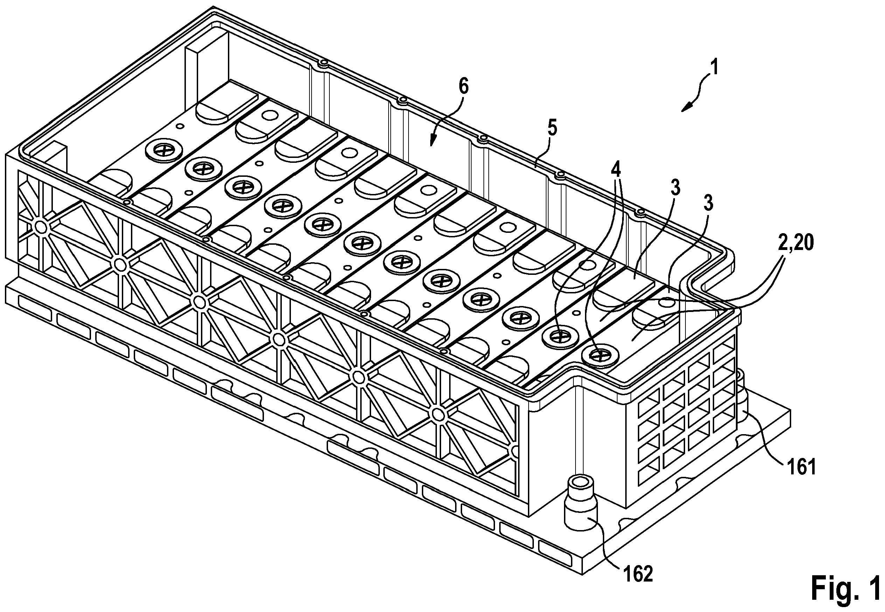

Die Figur 1 zeigt in einer perspektivischen Ansicht von oben ein erfindungsgemäßes Batteriemodul 1.

Das Batteriemodul 1 weist eine Mehrzahl an Batteriezellen 2 auf, welche bei dem in der Figur 1 gezeigten Ausführungsbeispiel bevorzugt als Lithium-Ionen-Batteriezellen 20 ausgebildet sind.

Die Batteriezellen 2 umfassen dabei jeweils beispielsweise Spannungsabgriffe 3, mittels welchen die Batteriezellen 2 mit in der Figur 1 nicht gezeigten Zellverbindern elektrisch seriell und/oder parallel verschaltet werden können.

Des Weiteren umfassen die Batteriezellen 2 dabei beispielsweise jeweils ein Entgasungselement 4, welches dazu dienen kann, in sicherheitskritischen Situationen Gas aus den Batteriezellen 2 ausströmen zu lassen.

Das Batteriemodul 1 weist weiterhin ein Gehäuse 5 auf.

Das Gehäuse 5 des Batteriemoduls 1 bildet dabei einen Aufnahmeraum 6 aus, in welchem die Mehrzahl an Batteriezellen 2 aufgenommen ist.

Dabei ist es möglich, dass das Gehäuse 5 des Batteriemoduls 1 mittels eines in der Figur 1 nicht gezeigten Deckelelements verschlossen werden kann, so dass der Aufnahmeraum 6 gegenüber einer Umgebung des Batteriemoduls 1 vollständig abgeschlossen ist.

An dieser Stelle sei bereits angemerkt, dass das Batteriemodul 1 einen ersten Anschluss 161 und einen zweiten Anschluss 162 aufweist, mittels welchen Temperierfluid in einen in der Figur 1 nicht zu erkennenden Strömungsraum 9 des Batteriemoduls 1 einströmen bzw. ausströmen kann.

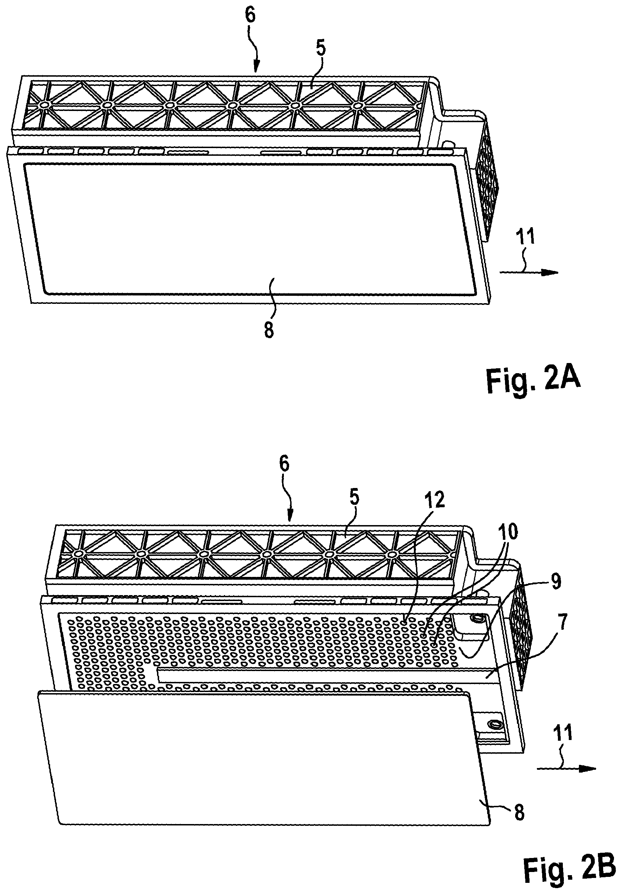

Die Figur 2A zeigt in einer perspektivischen Ansicht von unten eine erste Ausführungsform eines erfindungsgemäßen Batteriemoduls 1.
Die Figur 2B zeigt in einer perspektivischen Ansicht von unten die erste Ausführungsform des erfindungsgemäßen Batteriemoduls 1 gemäß Figur 2A in einer Explosionsdarstellung.

Die erste Ausführungsform des erfindungsgemäßen Batteriemoduls 1 soll nun anhand der Figuren 2A und 2B gemeinsam beschrieben werden.

Dabei ist zu erkennen, dass das Gehäuse 5 des Batteriemoduls 1 weiterhin ein Aufnahmeelement 7 ausbildet, welches zur Aufnahme einer Abdeckplatte 8 ausgebildet ist.

Insbesondere die Figur 2A zeigt dabei, dass die Abdeckplatte 8 in dem Aufnahmeelement 7 aufgenommen ist.

Dabei bilden die Abdeckplatte 8 und das Gehäuse 5 bzw. das Aufnahmeelement 7 einen von Temperierfluid durchströmbaren Strömungsraum 9 aus.

Des Weiteren ist insbesondere aus der Figur 2B zu erkennen, dass das Gehäuse 5 des Batteriemoduls 1 den Strömungsraum 9 weiterhin fluiddicht von dem Aufnahmeraum 6 trennt.

Die Figuren 2A und 2B zeigen dabei eine erste Ausführungsform des Batteriemoduls 1, bei welcher das Aufnahmeelement 7 jeweils in den Strömungsraum 9 ragende Strömungsleitelemente 10 ausbildet.

Die Strömungsleitelemente 10 sind dabei ausgebildet zu einer Störung einer Strömung eines durch den Strömungsraum 9 strömenden Temperierfluids.

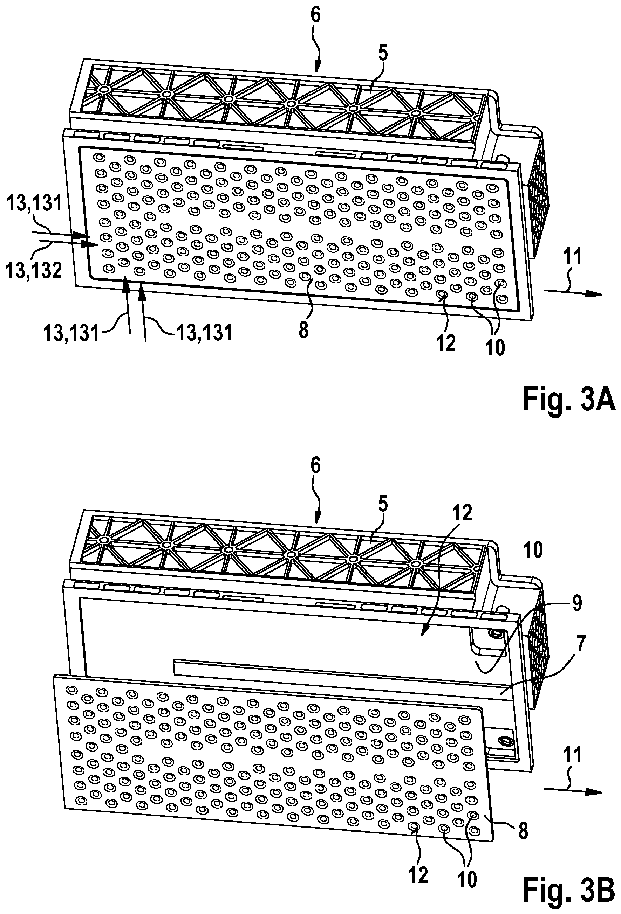

Die Figur 3A zeigt in einer perspektivischen Ansicht von unten eine zweite Ausführungsform eines erfindungsgemäßen Batteriemoduls 1.

Die Figur 3B zeigt in einer perspektivischen Ansicht von unten die zweite Ausführungsform des erfindungsgemäßen Batteriemoduls 1 gemäß Figur 3A in einer Explosionsdarstellung.

Die zweite Ausführungsform des erfindungsgemäßen Batteriemoduls 1 soll nun anhand der Figuren 3A und 3B gemeinsam beschrieben werden.

Die zweite Ausführungsform des Batteriemoduls 1 gemäß den Figuren 3A und 3B unterscheidet sich von der in den Figuren 2A und 2B gezeigten ersten Ausführungsform des Batteriemoduls 1 dadurch, dass nicht das Aufnahmeelement 7 jeweils in den Strömungsraum 9 ragende Strömungsleitelemente 10 ausbildet, sondern dass die Abdeckplatte 8 jeweils in den Strömungsraum 9 ragende Strömungsleitelemente 10 ausbildet.

Die Strömungsleitelemente 10 sind dabei ausgebildet zu einer Störung einer Strömung eines durch den Strömungsraum 9 strömenden Temperierfluids. Ansonsten sind die ersten Ausführungsform des Batteriemoduls 1 und die zweite Ausführungsform des Batteriemoduls 1 identisch, so dass auf eine Beschreibung bereits im Zusammenhang mit den Figuren 2A und 2B beschriebener Elemente an dieser Stelle verzichtet wird.

Insbesondere aus den Figuren 2B, 3A, 3B ist zu erkennen, dass die Strömungsleitelemente 10 eine parallel zu einer Längsrichtung 11 der Abdeckplatte 8 angeordnete Querschnittsfläche 12 aufweisen.

Dabei weist die Querschnittsfläche 12 gemäß der ersten erfindungsgemäßen Ausführungsform des Batteriemoduls 1 und der zweiten erfindungsgemäßen Ausführungsform des Batteriemoduls 1 jeweils eine kreisförmige Form auf.

Beispielsweise aus der Figur 3A ist zu erkennen, dass die Strömungsleitelemente 10 in mehreren Reihen 13 angeordnet sind.

Insbesondere sind dabei benachbart zu einander angeordnete Reihen 13 versetzt zueinander angeordnet.

Bei dem Ausführungsbeispiel gemäß Figur 3A ist dabei eine erste Reihe 131 versetzt zu einer zweiten Reihe 132 angeordnet.

Weiterhin ist aus der Figur 3A auch zu erkennen, dass die Reihen 13 sowohl in Richtung der Längsrichtung 11 der Abdeckplatte 8 verlaufend angeordnet sein können als auch senkrecht verlaufend zu der Richtung der Längsrichtung 11 der Abdeckplatte 8 angeordnet sein können.

An dieser Stelle sei hierzu angemerkt, dass die Anordnung der Strömungsleitelemente 10 in mehreren Reihen nicht auf das Ausführungsbeispiel gemäß Figur 3A beschränkt ist, sondern lediglich exemplarisch anhand der Figur 3A beschrieben ist.

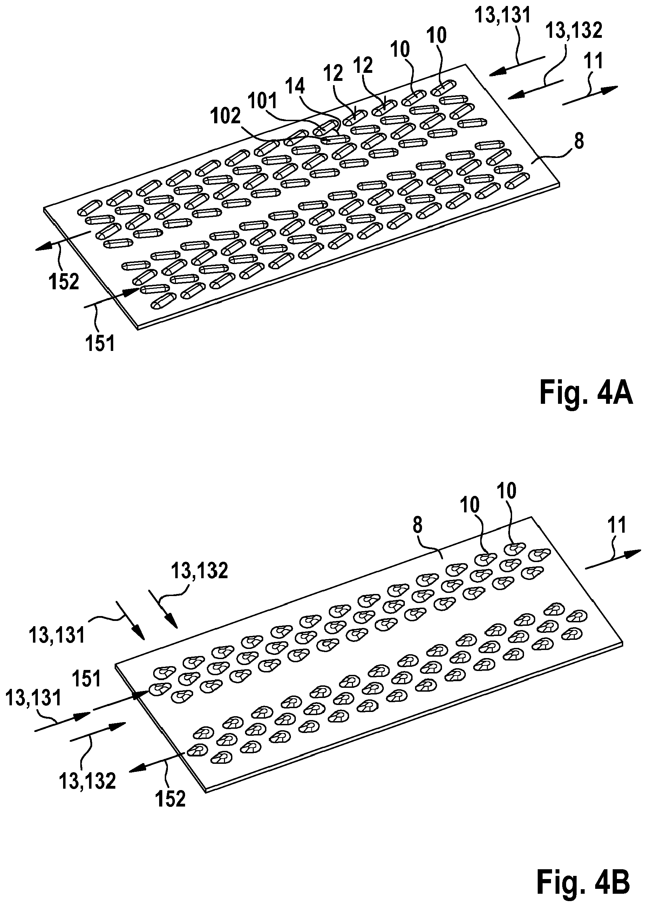

Die Figuren 4A und 4B zeigen jeweils weitere Ausführungsformen von Abdeckplatten 8. Dabei zeigen die Figuren 4A und 4B Ausführungsform, bei welchen die Abdeckplatte 8 die Strömungsleitelemente 10 ausbilden.

Die Figur 4A zeigt dabei eine Ausführungsform einer Abdeckplatte 8, bei welcher die Strömungsleitelemente 10 eine Querschnittsfläche 12 mit einer im Wesentlichen rechteckigen Form aufweisen.

Dabei sind die Strömungsleitelemente 10 in mehreren Reihen 13 angeordnet. Benachbart zueinander angeordnete Strömungsleitelemente 10, welche jeweils in zwei unmittelbar benachbart zueinander angeordneten Reihen 13 angeordnet sind, bilden dabei jeweils einen spitzen Winkel 14 zueinander aus.

Insbesondere bilden ein erstes Strömungsleitelement 101, welches in einer ersten Reihe 131 angeordnet ist, und ein zweites Strömungsleitelement 102, welches in einer zweiten Reihe 132 angeordnet ist, gemeinsam einen spitzen Winkel 14 aus.

Der Pfeil mit dem Bezugszeichen 151 bezeichnet dabei die Richtung eines in den Strömungsraum 9 einströmenden Temperierfluids und der Pfeil mit dem Bezugszeichen 152 bezeichnet dabei die Richtung eines aus dem Strömungsraum 9 ausströmenden Temperierfluids.

Die Figur 4B zeigt dabei eine Ausführungsform einer Abdeckplatte 8, bei welcher die Strömungsleitelemente 10 eine tropfenförmige Form der Querschnittsfläche 12 aufweisen

Beispielsweise ist aus der Figur 4B auch zu erkennen, dass die Strömungsleitelemente 10 in mehreren Reihen 13 angeordnet sind.

Insbesondere sind dabei benachbart zueinander angeordnete Reihen 13 versetzt zueinander angeordnet.

Bei dem Ausführungsbeispiel gemäß Figur 4B ist dabei eine erste Reihe 131 versetzt zu einer zweiten Reihe 132 angeordnet.

Weiterhin ist aus der Figur 4B auch zu erkennen, dass die Reihen 13 sowohl in Richtung der Längsrichtung 11 der Abdeckplatte 8 verlaufend angeordnet sein können als auch senkrecht verlaufend zu der Richtung der Längsrichtung 11 der Abdeckplatte 8 angeordnet sein können.

An dieser Stelle sei hierzu angemerkt, dass die Anordnung der Strömungsleitelemente 10 in mehreren Reihen 13 nicht auf das Ausführungsbeispiel gemäß Figur 4B beschränkt ist.

Der Pfeil mit dem Bezugszeichen 151 bezeichnet dabei die Richtung eines in den Strömungsraum 9 einströmenden Temperierfluids und der Pfeil mit dem Bezugszeichen 152 bezeichnet dabei die Richtung eines aus dem Strömungsraum 9 ausströmenden Temperierfluids.

Dabei ist weiterhin zu erkennen, dass Temperierfluid bevorzugt die Strömungsleitelemente 10 von einer breiteren Seite der Tropfenform anströmt.

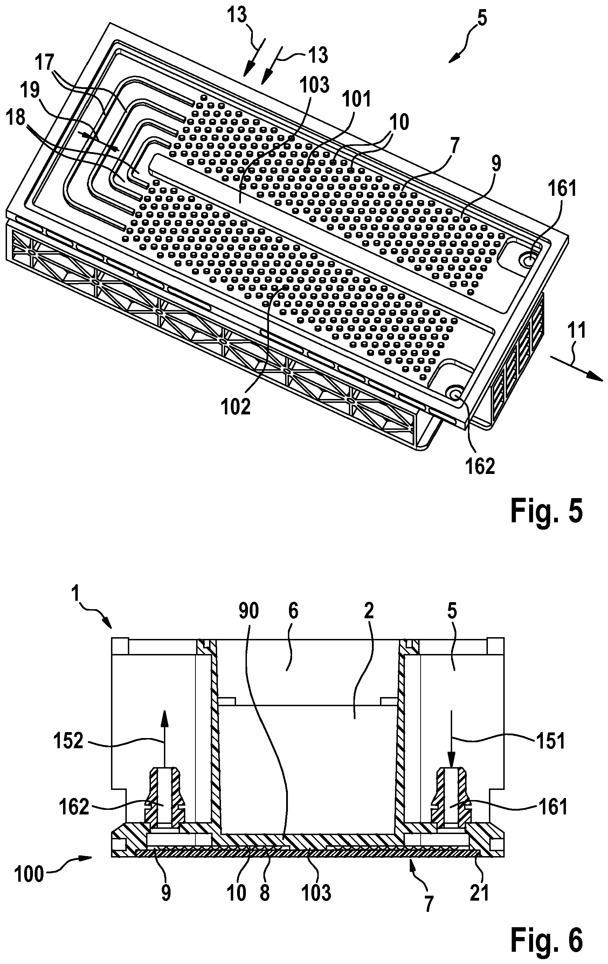

Figur 5 zeigt in einer perspektivischen Ansicht von unten ein Gehäuse 5 eines Batteriemoduls 1.

Die in der Figur 5 gezeigte Ausführungsform des Gehäuses 5 ist dabei in der Art ausgebildet, dass das Aufnahmeelement 7 des Gehäuses 5 in den Strömungsraum 9 ragende Strömungsleitelemente 10 ausbildet, welche zu einer Störung einer Strömung eines durch den Strömungsraum 9 strömenden Temperierfluids ausgebildet sind.

Dabei zeigt die Figur 5, dass das Gehäuse 5 des Batteriemoduls 1 einen ersten Anschluss 161 und einen zweiten Anschluss 162 aufweisen kann.

Dabei ist der erste Anschluss 161 ausgebildet zu einem Einströmen von Temperierfluid in den Strömungsraum 9 hinein und ist der zweite Anschluss 162 ausgebildet zu einem Ausströmen von Temperierfluid aus dem Strömungsraum 9 heraus.

An dieser Stelle sei hierzu auch noch angemerkt, dass die Strömungsleitelemente 10, wie bereits im Zusammenhang mit der ersten Ausführungsform des Batteriemoduls 1 gemäß den Figuren 2A und 2B sowie der zweiten Ausführungsform des Batteriemoduls 1 gemäß den Figuren 3A und 3B ausgeführt ist, in mehreren Reihen 13 zueinander angeordnet sind, wobei benachbart zueinander angeordnete Reihen 13 versetzt zueinander angeordnet sind.

Die in der Figur 5 gezeigte Ausführungsform des Strömungsraumes 9 unterscheidet sich von den bisher beschriebenen Ausführungsformen Strömungsraumes gemäß den Figuren 1 bis 4 dahingehend, dass der Strömungsraum 9 neben den Abstandselementen 10 auch Umlenkelemente 17 aufweist, welche dazu dienen, die Strömungsrichtung des Temperierfluids umzulenken.

Beispielsweise strömt Temperierfluid durch den ersten Anschluss 161 in den Strömungsraum 9 ein und strömt im Wesentlichen entgegen der Längsrichtung 11 der Abdeckplatte durch eine erste Mehrzahl 101 an Strömungsleitelementen 10.

Anschließend kehren die Umlenkelemente 17 die Strömungsrichtung des Temperierfluids um, so dass das Temperierfluid im Wesentlichen in Richtung der Längsrichtung 11 der Abdeckplatte 9 durch eine zweite Anzahl 102 an Abstandselementen 10 strömt und durch den zweiten Anschluss 162 aus dem Strömungsraum 9 heraus ausströmt.

An dieser Stelle sei noch bemerkt, dass ein Trennelement 103 die erste Anzahl 101 in Strömungsleitelementen 10 von der zweiten Anzahl 102 Strömungsleitelementen 10 trennt.

Gemäß dem Ausführungsbeispiel der Figur 5 bildet das Gehäuse 5 des Batteriemoduls 1 eine Mehrzahl an Umlenkelemente 17 aus, welche somit auch eine Mehrzahl an Umlenkkanälen 18 gemeinsam ausbilden. Dazu sei bemerkt, dass eine Kanalbreite 19 der Umlenkkanäle 18 in Richtung eines Randes des Strömungsraumes 9 zunimmt, um einen einheitlichen Druckverlust innerhalb der Umlenkungskanäle 18 auszubilden.

Figur 6 zeigt in einer Ansicht von der Seite eine Schnittansicht durch ein erfindungsgemäßes Batteriemodul 1.

Insbesondere ist das Gehäuse 5 des Batteriemoduls 1 gemäß Figur 6 dabei gemäß dem in den Figuren 1, 2A, 2b, 3A, 3B, 5 gezeigten Gehäuse 5 ausgebildet. Dabei sind insbesondere der erste Anschluss 161, welcher zu einem Einströmen von Temperierfluid in den Strömungsraum 9 hinein ausgebildet ist, und der zweite Anschluss 162, welcher zu einem Ausströmen von Temperierfluid aus dem Strömungsraum 9 heraus ausgebildet ist, zu erkennen.

Auch hier soll der Pfeil mit dem Bezugszeichen 151 einströmendes Temperierfluid bezeichnen und der Pfeil mit dem Bezugszeichen 152 ausströmendes Temperierfluid bezeichnen.

Weiterhin sind auch eine Batteriezelle 2 sowie deren Spannungsabgriffe 3 zu erkennen.

Das Gehäuse 5 des Batteriemoduls 1 bildet dabei das Aufnahmeelement 7 aus. Des Weiteren nimmt das Aufnahmeelement 7 des Gehäuses 5 die Abdeckplatte 8 auf. Insbesondere sind die Abdeckplatte 8 und das Aufnahmeelement 7 stoffschlüssig miteinander verbunden. Beispielsweise kann die stoffschlüssige Verbindung dabei geschweißt oder gelötet ausgebildet sein. Bevorzugt ist die stoffschlüssige Verbindung umlaufend an einem Randbereich 21 der Abdeckplatte 8 bzw. des Aufnahmeelements 7 und/oder an dem Trennelement 103 der Abdeckplatte 8 bzw. des Aufnahmeelements 7 angeordnet.

Dabei ist es möglich, dass zwischen der Abdeckplatte 8 und dem Gehäuse 5 des Batteriemoduls 1 bzw. dem Aufnahmeelement 7 des Batteriemoduls weiterhin ein in den Figuren nicht gezeigtes Dichtelement angeordnet ist.

Das Aufnahmeelement 7 des Gehäuses 5 des Batteriemoduls 1 und die Abdeckplatte 8 bilden dabei gemeinsam den Strömungsraum 9 aus.

Somit ist der Strömungsraum 9 also zwischen dem Aufnahmeelement 7 des Gehäuses 5 des Batteriemoduls 1 und der Abdeckplatte 8 ausgebildet.

Des Weiteren zeigt die Figur 6 auch Strömungsleitelemente 10, welche beispielsweise gemäß dem in der Figur 6 gezeigten Ausführungsbeispiel von dem Aufnahmeelement 7 ausgebildet werden. Selbstverständlich ist aber auch möglich, dass die Abdeckplatte 8 die Strömungsleitelemente 10 ausbildet.

Weiterhin trennt das Gehäuse 5 des Batteriemoduls 1 den Strömungsraum 9 fluiddicht von dem Aufnahmeraum 6, in welchem die Mehrzahl an Batteriezellen 2 aufgenommen ist. Insbesondere kann dabei das Aufnahmeelement 7 selbst für eine solche fluiddichte Trennung sorgen.

Weiteren sei im Zusammenhang mit der Figur 6 noch ausgeführt, dass die Mehrzahl an Batterien 2 unmittelbar an einer dem Strömungsraum 9 gegenüberliegenden Seite 90 des Aufnahmeelements 7 des Gehäuses 5 des Batteriemoduls 1 angeordnet ist.

Auch ist insbesondere aus der Figur 6 zu erkennen, dass das Aufnahmeelement 7, insbesondere gemeinsam mit der Abdeckplatte 8 einen Boden 100 des Batteriemoduls 1 ausbildet.

An dieser Stelle sei noch einmal angemerkt, dass die gezeigten Figuren lediglich zu einer Erläuterung des erfindungsgemäßen Batteriemoduls ein dienen sollen, und keinesfalls die Erfindung beschränken sollen.

Beispielsweise ist es auch möglich, dass die in den Figuren 4A und 4B gezeigten Ausbildungen der Abdeckplatten 8 auch analog von einem Aufnahmeelement 7 des Gehäuses 5 des Batteriemoduls 1 ausgebildet werden können.
Des Weiteren ist es auch möglich, dass die in der Figur 5 gezeigte Ausbildung des Aufnahmeelements 7 mit Strömungsleitelemente 10 und Umlenkelemente 17 analog auch von einer Abdeckplatte 8 ausgebildet werden können.

## Patentansprüche

1. Batteriemodul mit einer Mehrzahl an Batteriezellen (2),
insbesondere Lithium-Ionen-Batteriezellen (20), welche in einem von einem Gehäuse (5) des Batteriemoduls (1) ausgebildeten Aufnahmeraum (6) aufgenommen sind, wobei
das Gehäuse (5) des Batteriemoduls (1) weiterhin ein Aufnahmeelement (7) ausgebildet zur Aufnahme einer Abdeckplatte (8) ausbildet, wobei in dem Aufnahmeelement (7) eine Abdeckplatte (8) in der Art aufgenommen ist, dass
die Abdeckplatte (8) und das Gehäuse (5) einen von Temperierfluid durchströmbaren Strömungsraum (9) ausbilden, wobei das Gehäuse (5) des Batteriemoduls (1) den Strömungsraum (9) weiterhin fluiddicht von dem Aufnahmeraum (6) trennt.

2. Batteriemodul nach dem vorherigen Anspruch 1,
**dadurch gekennzeichnet, dass**
das Aufnahmeelement (7) und/oder die Abdeckplatte (8) jeweils in den Strömungsraum (9) ragende Strömungsleitelemente (10) ausbilden, welche zu einer Störung einer Strömung eines durch den Strömungsraum (9) strömenden Temperierfluids ausgebildet sind.

3. Batteriemodul nach dem vorherigen Anspruch 2,
**dadurch gekennzeichnet, dass**
die Strömungsleitelemente (10) eine parallel zu einer Längsrichtung (11) der Abdeckplatte (8) angeordnete Querschnittsfläche (12) aufweisen, wobei Querschnittsfläche (12) eine kreisförmige, ovale, tropfenförmige, rechteckige oder quadratische Form aufweisen.

4. Batteriemodul nach dem vorherigen Anspruch 3,
**dadurch gekennzeichnet, dass**
die Strömungsleitelemente (10) mit einer insbesondere eine kreisförmige Form aufweisenden Querschnittsfläche (12) in mehreren Reihen (13) angeordnet sind, wobei benachbart zueinander angeordnete Reihen (13, 131,132) versetzt zueinander angeordnet sind.

5. Batteriemodul nach dem vorherigen Anspruch 3,
**dadurch gekennzeichnet, dass**
die Strömungsleitelemente (10) mit einer eine rechteckigen Form aufweisenden Querschnittsfläche (12) in mehreren Reihen (13) angeordnet sind, wobei benachbart zueinander angeordnete Strömungsleitelemente (10) zweier benachbarter Reihen (13) jeweils unter Ausbildung eines spitzen Winkels (14) zueinander angeordnet sind.

6. Batteriemodul nach einem der vorherigen Ansprüche 1 bis 5,
**dadurch gekennzeichnet, dass**
weiterhin zwischen der Abdeckplatte (8) und dem Gehäuse (5) des Batteriemoduls (1) ein Dichtelement angeordnet ist.

7. Batteriemodul nach einem der vorherigen Ansprüche 1 bis 6,
**dadurch gekennzeichnet, dass**
die Abdeckplatte (8) stoffschlüssig, wie insbesondere gelötet, mit dem Aufnahmeelement (7) verbunden ist.

8. Batteriemodul nach einem der vorherigen Ansprüche 1 bis 7,
**dadurch gekennzeichnet, dass**
die Abdeckplatte (8) und/oder das Gehäuse (5) des Batteriemoduls (1) einen ersten Anschluss (161) ausgebildet zu einem Einströmen von Temperierfluid in den Strömungsraum (9) hinein und einen zweiten Anschluss (162) ausgebildet zu einem Ausströmen von Temperierfluid aus dem Strömungsraum (9) heraus aufweisen.

9. Batteriemodul nach einem der vorherigen Ansprüche 1 bis 8,
**dadurch gekennzeichnet, dass**
die Mehrzahl an Batteriezellen (2) unmittelbar an einer dem Strömungsraum (9) gegenüberliegenden Seite (90) des Aufnahmeelements (7) des Gehäuses (5) des Batteriemoduls (1) angeordnet ist.

10. Batteriemodul nach einem der vorherigen Ansprüche 1 bis 9,
**dadurch gekennzeichnet, dass**
das Aufnahmeelement (7) einen Boden (100) des Batteriemoduls (1) ausbildet.
